# EUROPEAN PATENT APPLICATION

(11) **EP 3 404 817 A1**
(43) Date of publication of application: **21.11.2018**
(21) Application number: 18172579.7
(22) Date of filing: 16.05.2018
(51) Int. Cl.: H02M 3/335, H02M 1/00

(54) **SWITCHING POWER SUPPLY AND AMPLIFICATION DEVICE**

(30) Priority: 18.05.2017 JP 2017098652; 07.09.2017 JP 2017171700
(71) Applicant: Onkyo Corporation, Osaka 572-0028 (JP)
(72) Inventor: ASAO, Kei, Osaka, Osaka 572-0028 (JP); NAKANISHI, Yoshinori, Osaka, Osaka 572-0028 (JP)
(74) Representative: Horn Kleimann Waitzhofer Patentanwälte PartG mbB

(57) **Abstract**

[PROBLEM] To provide a switching power supply which does not transit to burst mode.

[Solution] A switching power supply 1 includes a control IC 5. The control IC 5 controls burst mode or normal mode based on voltage V_{SENSE} which is occurred in a sense terminal SENSE which is connected between a current detection resistor R5 and a switching element 4 and a value V_{COMP} based on voltage V_{FB} which is occurred in a feedback terminal FB which is connected to a photo coupler 8. The control IC 5 sets the switching element 4 ON until voltage V_{SENSE} reaches to the value V_{COMP}. When the voltage V_{SENSE} reaches to the value V_{COMP}, the control IC 5 sets the switching element 4 OFF. The switching power supply 1 further includes a change circuit 9 which changes inclination of the voltage V_{SENSE}.

## Description

### [TECHNICAL FIELD]

The present invention relates to a flyback type switching power supply and an amplification device.

### [BACKGROUND ART]

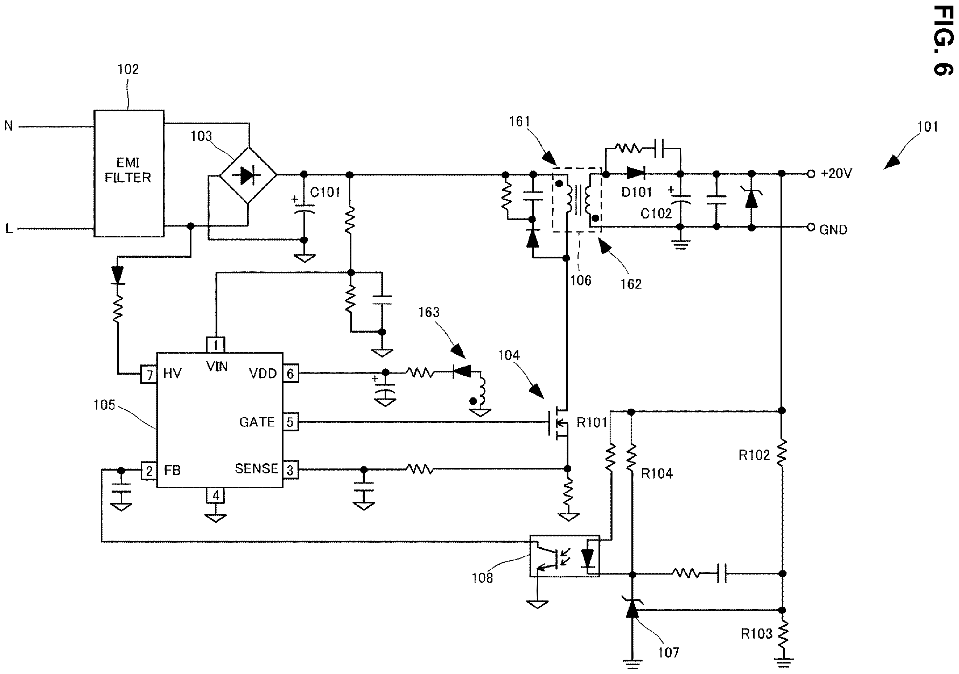

Fig. 6 is a diagram illustrating a conventional flyback type switching power supply. A switching power supply 101 includes an EMI filter 102, a rectifier circuit 103, a condenser C101, a switching element 104, a control IC 105, a transformer 106, a diode D101, a condenser C102, a shunt regulator 107, and a photo coupler 108.

The EMI (Electro Magnetic Interference) filter 102 removes noise from AC voltage which is input from an AC power supply. The rectifier circuit 103 rectifies AC voltage. The condenser C101 smooths voltage which is rectified by the rectifier circuit 103. Smoothed AC voltage is supplied to the switching element 104. The control IC 105 (control circuit) controls the switching element 104. A power supply terminal VDD of the control IC 105 is connected to an auxiliary winding 163 of the transformer 106. The control IC 105 operates according to power supply voltage that voltage which is output from the auxiliary winding 163 is rectified. The switching element 104 is controlled by the control IC 105 and supplies optional frequency AC voltage to a primary winding 161 of the transformer 106 by switching with optional frequency. For example, the switching element 104 is an n type MOSFET. The switching element 104 supplies voltage from the condenser C101 or voltage of ground potential to the primary winding 161. The transformer 106 changes voltage which is supplied to the primary winding 161 and outputs changed voltage from the secondary winding 162. The diode D101 rectifies AC voltage from the secondary winding 162. The condenser C102 smooths voltage which is rectified by the diode D101. Voltage which is smoothed by the condenser C102 is output voltage of the switching power supply 101.

The shunt regulator 107 is connected to the photo coupler 108 at secondary side of the switching power supply 101. Further, the shunt regulator 107 changes current which flows to the photo coupler 108 based on output voltage of the switching power supply 101. A reference terminal of the shunt regulator 107 is connected between a resistor R102 and a resistor R103. A cathode of the shunt regulator 107 is connected to the photo coupler 108 (a cathode of a light emitting diode). An anode of the shunt regulator 107 is connected to ground potential.

The photo coupler 108 (feedback element) has the light emitting diode and a photo transistor. Output voltage of the switching power supply 101 is supplied to an anode of the light emitting diode via the resistor R101. The cathode of the light emitting diode is connected to the shunt regulator 107. A collector of the photo transistor is connected to a feedback terminal FB of the control IC 105. An emitter of the photo transistor is connected to ground potential. Output voltage of the switching power supply 101 is supplied to one end of the resistor R104. The other end of the resistor R104 is connected to the shunt regulator 107. The control IC 105 is connected to the photo coupler 108 at primary side of the switching power supply 101.

In the shunt regulator 107, sink current of the cathode increases or decreases based on divide voltage of output voltage of the switching power supply 101 by the resistor R102 and the resistor R103 which is input to the reference terminal. In the shunt regulator 107, the higher voltage of the reference terminal is, the more sink current of cathode increases. Further, in the shunt regulator 107, the lower voltage of the reference terminal is, the more sink current of the cathode decreases.

In the photo coupler 108, current of the light emitting diode increases or decreases based on increase or decrease of sink current of the shunt regulator 107. Increase or decrease of current of the photo transistor changes voltage of the feedback terminal FB of the control IC 105. Herein, power supply is connected to the feedback terminal FB of the control IC 105 via a resistor. For this reason, the more current of the photo transistor increases, the more voltage of the feedback terminal FB decreases. The control IC 105 adjusts output voltage of the switching power supply 101 by changing duty of ON / OFF by the switching element 104 based on voltage of the feedback terminal FB.

The control IC mounts burst mode which stops switching to reduce electric power consumption at standby and light load (see patent literature 1 with regard to the burst mode.). An audio or the like such as a class D amplifier consumes large electric power at large signal, however it consumes almost no electric power at small signal. The switching power supply which includes the control IC which mounts the burst mode transits to the burst mode because of light load at small signal. The burst mode has adverse effect in sound quality (quality level) because it occurs at a cycle in which the frequency is within the audible band.

It is necessary that the following condition is satisfied to finish the burst mode.
Electric power which is transmitted from primary side to secondary side at operating continuously <= electric power which is output from secondary side Namely, when the switching power supply supplies electric power to an audio system, if regular electric power consumption of the audio system is smaller than electric power which is transmitted from primary side to secondary side at operating continuously, the switching power supply becomes the burst mode.

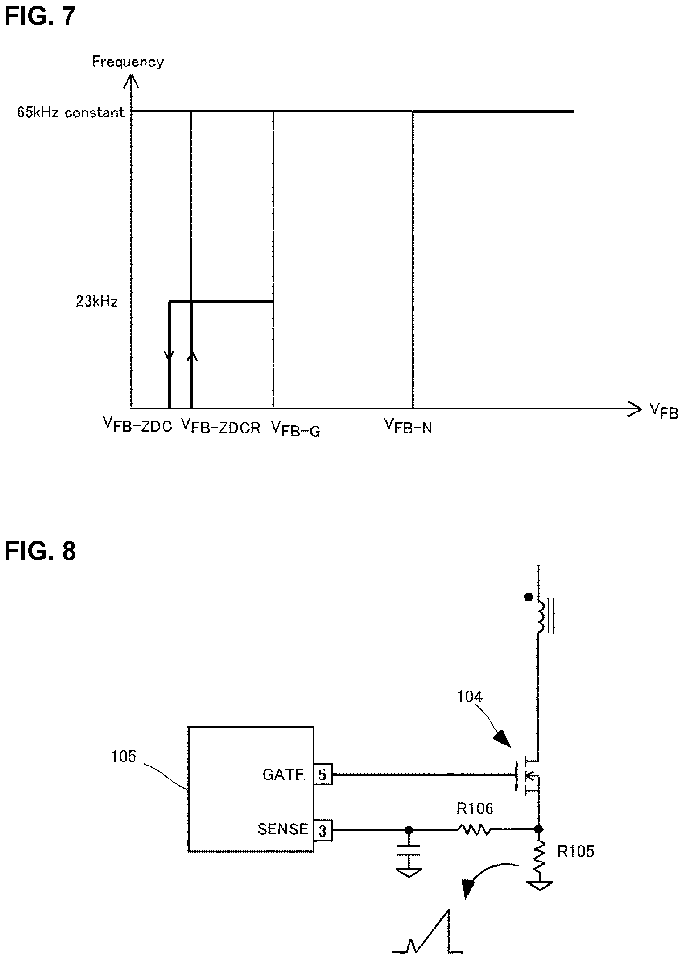

The control IC controls frequency of PWM based on voltage V_{FB} of the feedback terminal. Fig. 7 is a diagram illustrating relationship of frequency of PWM and voltage V_{FB} of the feedback terminal. A horizontal axis illustrates voltage V_{FB}, and a vertical axis illustrates frequency. When voltage V_{FB} is not less than V_{FB-N}, frequency is constant with 65 kHz. When voltage V_{FB} is between V_{FB-N} and V_{FB-G}, OFF time of the switching element changes and frequency changes between 23 kHz and 65 kHz. When Voltage V_{FB} is between V_{FB-G} and V_{FB-ZDC}, frequency is 23 kHz. When voltage V_{FB} becomes smaller than V_{FB-ZDC}, the switching element becomes OFF. When voltage V_{FB} becomes V_{FB-ZDCR}, the switching element becomes ON, and frequency becomes 23 kHz.

Herein, the larger output voltage is, the higher V_{FB} becomes. When output voltage is small and V_{FB} becomes smaller than predetermined threshold (above mentioned V_{FB-ZDC}), the burst occurs (switching stops). Thus, output voltage descends and V_{FB} rises because of correction. When V_{FB} becomes larger than predetermined threshold (above mentioned V_{FB-ZDCR}), switching starts. This repeat is the burst mode.

Fig. 8 is a diagram illustrating a part of Fig. 6. A current detection resistor R105 is connected to a source of the switching element 104. Further, a sense terminal SENSE of the control IC 105 is connected between the source of the switching element 104 and the current detection resistor R105 via a resistor R106.

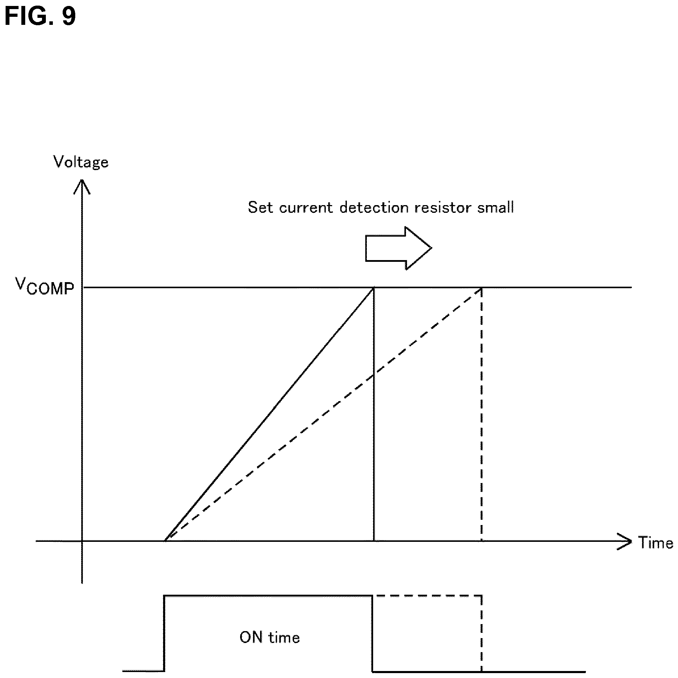

The control IC 105 has current limit function. Concretely, when voltage V_{SENSE} of the sense terminal SENSE reaches to 0.8V, the control IC 105 stops operation of the switching element 104 for current protection. Further, the control IC 105 has function which controls duty of PWM as described above. The control IC 105 decides ON time of the switching element 104 based on V_{SENSE} and V_{COMP}. Herein, V_{COMP} = (VFB - 0.6)/4. When V_{SENSE} reaches to V_{COMP}, the control IC 105 sets the switching element 104 OFF immediately. The shorter ON time of the switching element 104 is, the smaller electric power which is transmitted to secondary side is per switching. Namely, current at continuous operation starting becomes small. As a problem, when maximum current (current limit value) increases, the resistor value of the current detection resistor R105 must be low. In this case, as illustrated in Fig. 9, ON time of the switching element 104 extends because time that V_{SENSE} reaches to V_{COMP} extends.

### [PRIOR ART DOCUMENT]

### [PATENT LITERATURE]

[PATENT LITERATURE 1] JP 2010-206949 A

### [SUMMARY OF THE INVENTION]

### [PROBLEM TO BE RESOLVED BY THE INVENTION]

There is a problem that a transition to burst mode occurs when the ON time of a switching element is long and electric power which is output from primary side to secondary side at operating continuously becomes large.

An objective of the present invention is to provide a switching power supply which does not transit to burst mode.

A switching power supply of the a first invention comprising: a feedback element; a voltage detection element which is connected to the feedback element at secondary side of the switching power supply and changes current which flows to the feedback element based on output voltage of the switching power supply; a control circuit which is connected to the feedback element at primary side of the switching power supply and controls the switching element; and a current detection resistor which is connected to the switching element, wherein the controller circuit controls burst mode or normal mode based on voltage which is occurred in a first terminal which is connected between the current detection resistor and the switching element and a value based on voltage which is occurred in a second terminal which is connected to the feedback element, sets the switching element ON until the voltage which is occurred in the first terminal reaches to the value based on the voltage which is occurred in the second terminal, and sets the switching element OFF when the voltage which is occurred in the first terminal reaches to the value based on the voltage which is occurred in the second terminal, further comprising: a change circuit which changes inclination of the voltage which is occurred in the first terminal.

In the present invention, a change circuit changes inclination of voltage which is occurred in a first terminal of a control circuit which is connected between a current detection resistor and a switching element. Herein, the control circuit sets the switching element ON until voltage which is occurred in the first terminal reaches to a value based on voltage which is occurred in a second terminal which is connected to a feedback element. Further, when voltage which is occurred in the first terminal reaches to the value based on voltage which is occurred in the second terminal, the control circuit sets the switching element OFF. A resistor value of the current detection resistor can be large so that inclination of voltage which is occurred in the first terminal becomes large because inclination of voltage which is occurred in a first terminal is changed by the change circuit. Thus, a switching power supply does not transit to burst mode because ON time of the switching element becomes short.

The switching power supply of a second invention is the switching power supply of the first invention, wherein the change circuit has a diode in which an anode is connected between the first terminal and the current detection resistor and a cathode is connected to a resistor, and the resistor in which one end is connected to the cathode and the other end is connected to standard potential.

In the present invention, the change circuit has a diode and a resistor. An anode of the diode is connected between the first terminal and the current detection resistor. A cathode of the diode is connected to the resistor. Further, one end of the resistor is connected to the cathode. The other end of the resistor is connected to standard potential. Herein, when voltage which is occurred in the current detection resistor becomes larger than forward voltage of the diode, current flows to the diode. Thus, inclination of voltage which is occurred in the first terminal becomes small.

The switching power supply of a third invention is the switching power supply of the first or the second invention, further comprising: a switch which is for switching fist mode which operates the change circuit and second mode which does not operate the change circuit.

The burst mode has a role which reduces electric power consumption at light load. For this reason, in an amplification device which includes the switching power supply and an amplifier, when music is not reproduced (audio signal is not amplified) (for example, at the network standby), it is preferable that switching frequency is reduced by the burst mode. In the present invention, a switch which is for changing first mode which operates the change circuit and second mode which does not operate is included. Thus, the change circuit is not operated, the switching power supply transits to the burst mode, and power saving can be realized.

The switching power supply of a fourth invention is the switching power supply of the first or the second invention, further comprising: a switch which is for switching first mode which operates the change circuit and second mode which does not operate the change circuit, wherein the switch is connected between the other end of the resistor and the standard potential.

The switching power supply of a fifth invention is the switching power supply of the fourth invention, wherein the switch becomes ON in case of the first mode and becomes OFF in case of the second mode.

The switching power supply of a sixth invention is the switching power supply of the fourth or the fifth invention, wherein the switch is a photo MOS relay which has a light emitting diode and a MOSFET, further comprising: a controller; and an npn type bipolar transistor in which a collector is connected to a cathode of the light emitting diode, a base is connected to the controller, and an emitter is connected to standard potential, an anode of the light emitting diode is connected to output of the switching power supply via a current limit resistor, and the MOSFET is connected between the other end of the resistor and the standard potential.

The switching power supply of a seventh invention is the switching power supply of the six invention, wherein the controller sets the switch ON by setting potential of the base "high" in case of the first mode, and sets the switch OFF by setting potential of the base "low" in case of the second mode.

In the present invention, in case of the first mode, a controller sets base potential of a bipolar transistor "high". Thus, the npn type bipolar transistor becomes ON, a light emitting diode lights, and the switch (photo MOS relay) becomes ON. Further, in case of the second mode, the controller sets base potential of the bipolar transistor "low". Thus, the npn type bipolar transistor becomes OFF, the light emitting diode does not light, and the switch (photo MOS relay) becomes OFF.

The switching power supply of an eighth invention comprising: the switching power supply according to any one of the first to the seventh inventions; and an amplifier to which output voltage from the switching power supply is supplied to.

In the present invention, output voltage from the switching power supply is supplied to the amplifier. Sound quality is good because the switching power supply does not transit to the burst mode.

### [EFFECT OF THE INVENTION]

According to the present invention, the switching power supply does not transit to the burst mode.

### [BRIEF DESCRIPTION OF THE DRAWINGS]

Fig. 1 is a diagram illustrating a circuit configuration of a switching power supply according to an embodiment of the present invention.
Fig. 2 is a diagram illustrating voltage which is occurred in a sense terminal.
Fig. 3 is a table illustrating noise level and so on.
Fig. 4 is a diagram illustrating a part of a switching power supply according to a variation.
Fig. 5 is a diagram illustrating a part of the switching power supply according to the variation.
Fig. 6 is a diagram illustrating a conventional flyback type switching power supply.
Fig. 7 is a diagram illustrating relationship of frequency of PWM and voltage of the feedback terminal.
Fig. 8 is a diagram illustrating a part of Fig. 6.
Fig. 9 is a diagram illustrating voltage of a sense terminal.

### [DESCRIPTION OF THE EMBODIMENTS]

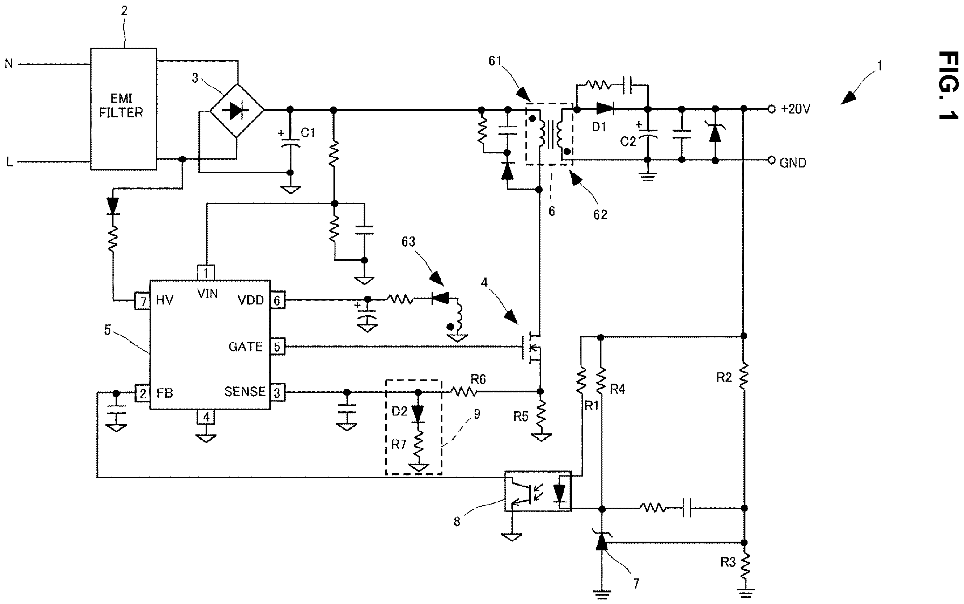

An embodiment of the present invention is described below. Fig.1 is a diagram illustrating a circuit configuration of a switching power supply according to an embodiment of the present invention. The switching power supply 1 includes an EMI filter 2, a rectifier circuit 3, a condenser C1, a switching element 4, a control IC 5, a transformer 6, a diode D1, a condenser C2, a shunt regulator 7, and a photo coupler 8.

The EMI (Electro Magnetic Interference) filter 2 removes noise from AC voltage which is input from an AC power supply. The rectifier circuit 3 rectifies AC voltage. The condenser C1 smooths voltage which is rectified by the rectifier circuit 3. Smoothed AC voltage is supplied to the switching element 4. The control IC 105 (control circuit) controls the switching element 4. A power supply terminal VDD of the control IC 5 is connected to an auxiliary winding 63 of the transformer 6. The control IC 5 operates according to power supply voltage, which is voltage output from the auxiliary winding 63 is rectified. The switching element 4 is controlled by the control IC 5 and supplies optional frequency AC voltage to a primary winding 61 of the transformer 6 by switching with optional frequency. For example, the switching element 4 is an n type MOSFET. The switching element 4 supplies voltage from the condenser C1 or voltage of ground potential to the primary winding 61. The transformer 6 changes voltage which is supplied to the primary winding 61 and outputs changed voltage from the secondary winding 62. The diode D1 rectifies AC voltage from the secondary winding 62. The condenser C2 smooths voltage which is rectified by the diode D1. Voltage which is smoothed by the condenser C2 is output voltage of the switching power supply 1.

Output voltage from the switching power supply 1 is supplied to a not illustrated amplifier. An amplification device is composed of the switching power supply 1 and the amplifier.

The shunt regulator 7 (voltage detection element) is connected to the photo coupler 8 at secondary side of the switching power supply 1. Further, the shunt regulator 7 changes current which flows to the photo coupler 8 based on output voltage of the switching power supply 1. A reference terminal of the shunt regulator 7 is connected between a resistor R2 and a resistor R3. A cathode of the shut regulator 7 is connected to the photo coupler 8 (a cathode of a light emitting diode). An anode of the shunt regulator 7 is connected to ground potential.

The photo coupler 8 (feedback element) has a light emitting diode and a photo transistor. Output voltage of the switching power supply 1 is supplied to an anode of the light emitting diode via the resistor R1. A cathode of the light emitting diode is connected to the shunt regulator 7. A collector of the photo transistor is connected to a feedback terminal FB of the control IC 5. An emitter of the photo transistor is connected to ground potential. Output voltage of the switching power supply 1 is supplied to one end of a resistor R4. The other end of the resistor R4 is connected to the shunt regulator 7. The control IC 5 is connected to the photo coupler 8 at primary side of the switching power supply 1.

In the shunt regulator 7, sink current of the cathode increases or decreases based on divide voltage of output voltage of the switching power supply 1 by the resistor R2 and the resistor R3 which is input to the reference terminal. In the shunt regulator 7, the higher voltage of the reference terminal is, the more sink current of cathode increases. Further, in the shunt regulator 7, the lower voltage of the reference terminal is, the more sink current of the cathode decreases.

In the photo coupler 8, current of the light emitting diode increases or decreases based on increase or decrease of sink current of the shunt regulator 7. Increase or decrease of current of the photo transistor changes voltage of the feedback terminal FB of the control IC 5. Herein, power supply is connected to the feedback terminal FB of the control IC 5 via a resistor. For this reason, the more current of the photo transistor increases, the more voltage of the feedback terminal FB decreases. The control IC 5 adjusts output voltage of the switching power supply 1 by changing duty of ON / OFF by the switching element 4 based on voltage of the feedback terminal FB.

A current detection resistor R5 is connected to a source of the switching element 4. The switching power supply 1 further includes a change circuit 9. The change circuit 9 changes inclination of voltage which is occurred in the sense terminal SENSE (first terminal) of the control IC 5. The sense terminal SENSE of the control IC 5 is connected between the source of the switching element 4 and the current detection resistor R5 via a resistor R6. The change circuit 9 includes a diode D2 and a resistor R7. The diode D2 is a shot key diode. An anode of the diode D2 is connected between the sense terminal SENSE and the current detection resistor R5. A cathode of the diode D2 is connected to the resistor R7. One end of the resistor R7 is connected to the cathode of the diode D2. The other end of the resistor R7 is connected to ground potential (standard potential).

When voltage which is occurred in the current detection resistor R5 becomes larger than forward voltage of the diode D2, current flows to the diode D2. Thus, inclination of voltage V_{SENSE} which is occurred in the sense terminal SENSE becomes small.

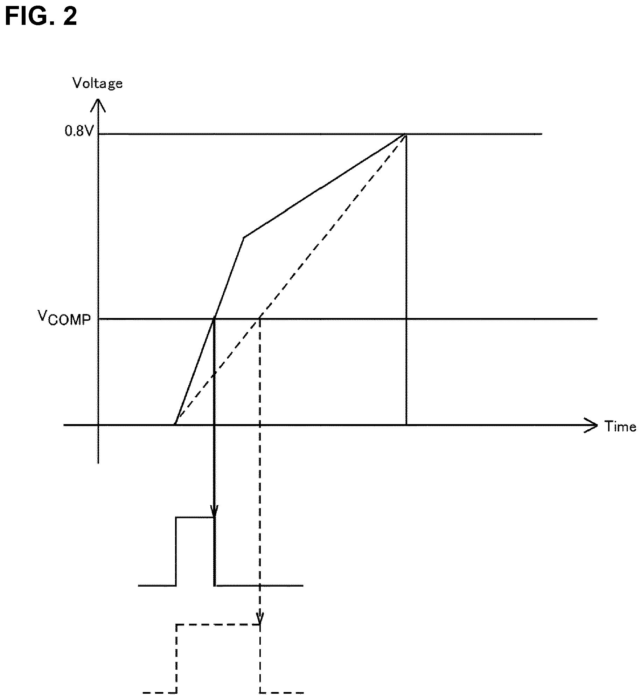

Fig. 2 is a diagram illustrating voltage V_{SENSE} which is occurred in the sense terminal SENSE. A horizontal axis illustrates time, and a vertical axis illustrates voltage. When voltage which is occurred in the sense terminal SENSE reaches to 0.8V, the control IC 5 stops operation of the switching element 4 for current protection. Further, the control IC 5 controls normal mode or burst mode based on the value V_{COMP} which is based on voltage V_{SENSE} which is occurred in the sense terminal SENSE and voltage V_{FB} which is occurred in the feedback terminal FB (second terminal). The control IC 5 sets the switching element 4 ON until voltage V_{SENSE} which is occurred in the sense terminal SENSE reaches to a value V_{COMP} which is based on voltage V_{FB} which is occurred in the feedback terminal FB. Herein, V_{COMP} = (V_{FB} - 0.6) / 4. Further, when V_{SENSE} reaches to V_{COMP}, the control IC 5 sets the switching element 4 ON.

In Fig. 2, broken line is V_{SENSE} in case where there is not the change circuit 9. Solid line is V_{SENSE} in the present embodiment. As illustrated in Fig. 2, in the present embodiment, inclination of two steps is provided. And, by setting inclination large only in voltage area that the switching element 4 starts continuous operation, ON time at light load can be short. Further, by setting inclination small from predetermined point, time to current protect can be extended.

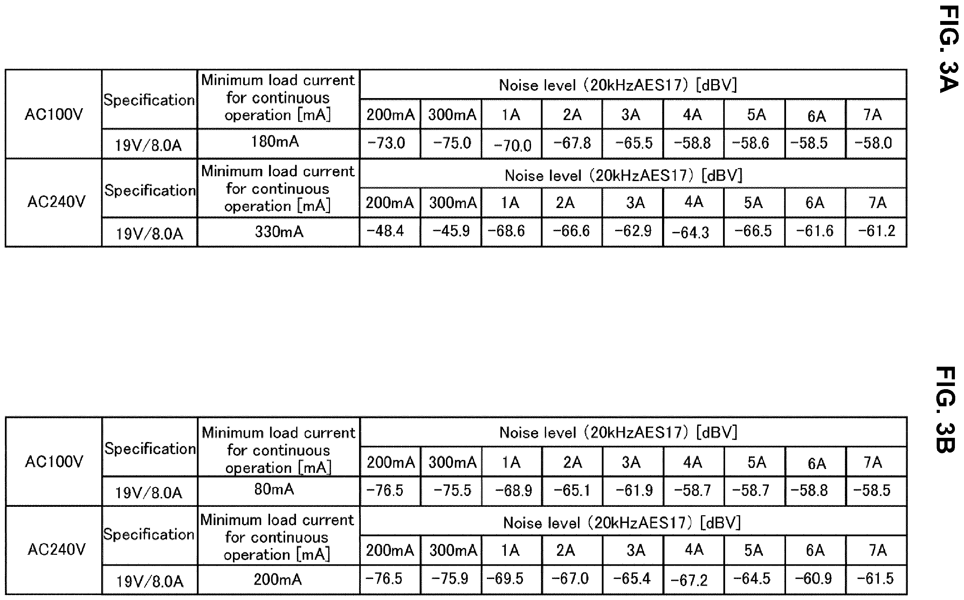

Fig. 3 is a table illustrating noise level and so on. Fig. 3(a) is a table in case where there is not the change circuit 9. Fig. 3(b) is a table in case where there is the change circuit 9. As illustrated, noise is remarkably improved in 200 mA and 300 mA.

As described above, in the present embodiment, the change circuit 9 changes inclination of voltage V_{SENSE} which is occurred in the sense terminal SENSE of the control IC 5 which is connected between the current detection resistor R5 and the switching element 4. Herein, the control IC 5 sets the switching element 4 ON until voltage V_{SENSE} which is occurred in the sense terminal SENSE reaches to the value V_{COMP} based on voltage V_{FB} which is occurred in the feedback terminal FB which is connected to the photo coupler 8. Further, when voltage V_{SENSE} which is occurred in the sense terminal SENSE reaches to the value V_{COMP} based on voltage V_{FB} which is occurred in the feedback terminal FB, the control IC 5 sets the switching element 4 OFF. A resistor value of the current detection resistor R5 can be large so that inclination of voltage V_{SENSE} which is occurred in the sense terminal SENSE becomes large because inclination of voltage V_{SENSE} which is occurred in the sense terminal SENSE is changed by the change circuit 9. Thus, the switching power supply 1 does not transit to the burst mode because ON time of the switching element 4 becomes short.

Further, in the present embodiment, the change circuit 9 has the diode D2 and the resistor R7. The anode of the diode D2 is connected between the sense terminal SENSE and the current detection resistor R5. The cathode of the diode D2 is connected to the resistor R7. Further, one end of the resistor R7 is connected to the cathode. The other end of the resistor R7 is connected to standard potential (ground potential). Herein, when voltage which is occurred in the current detection resistor R5 becomes larger than forward voltage of the diode D2, current flows to the diode D2. Thus, inclination of voltage V_{SENSE} which is occurred in the sense terminal SENSE becomes small.

Further, in the present embodiment, output voltage from the switching power supply 1 is supplied to the amplifier. Sound quality is good because the switching power supply 1 does not transit to the burst mode.

The embodiment of the present invention is described above, but the mode to which the present invention is applicable is not limited to the above embodiment, and, as exemplified below, can be suitably varied without departing from the scope of the present invention.

In the above mentioned embodiment, the switching power supply 1 does not transit to the burst mode because of the change circuit 9. However, the bust mode has a role which reduces electric power consumption at light load. For this reason, in the amplification device which includes the switching power supply 1 and the amplifier, when music is not reproduced (audio signal is not amplified) (for example, at network standby or the like), it is preferable that switching frequency is reduced by the burst mode.

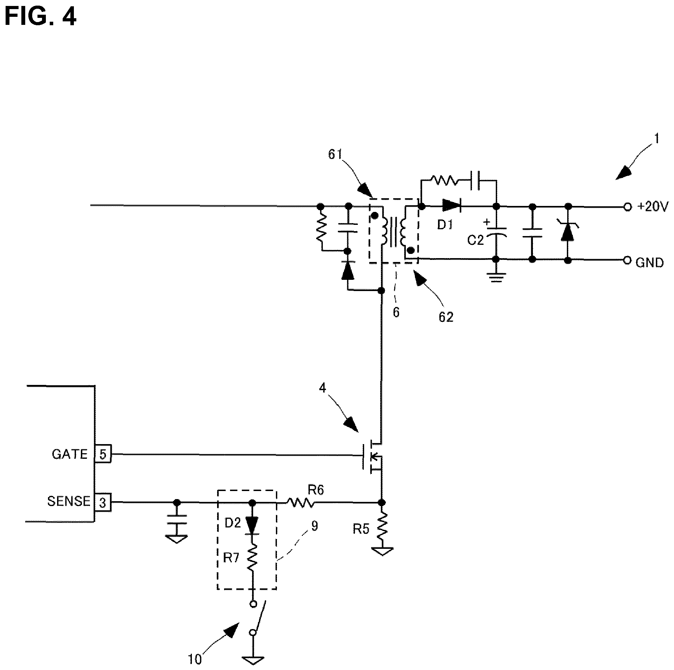

Fig. 4 is a diagram illustrating a part of a switching power supply according to a variation. The switching power supply 1 further includes a switch 10. The switch 10 is for switching burst avoidance mode (first mode) which operates the change circuit 9 or burst non-avoidance mode (second mode) which does not operate the change circuit 9. The switch 10 is connected between the other end of the resistor R7 and ground potential. When reproducing music, namely, output is not muted (mute: OFF), the switch 10 becomes ON. For this reason, the change circuit 9 operates, the switching power supply 1 does not transit to the burst mode, and sound quality is good.

On the other hand, when stopping music reproduce such as network standby or the like, namely, output is muted (mute: ON), the switch 10 becomes OFF. For this reason, the change circuit 9 does not operate, the switching power supply 1 transits to the burst mode, and electric power consumption is reduced. In Fig. 2, broken line is at the burst non-avoidance mode. Solid line is at the burst avoidance mode. As illustrated by broken line, the switching power supply 1 transits to the burst mode because ON time of the switching element 4 becomes long.

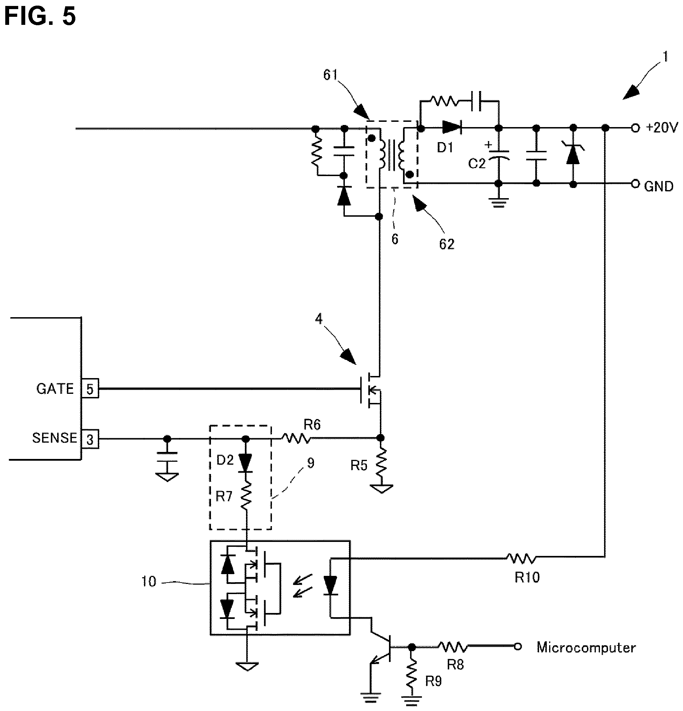

Concretely, as illustrated in Fig. 5, the switch 10 is a photo MOS relay. The photo MOS relay 10 has a light emitting diode and a MOSFET. The switching power supply 1 further includes a not shown microcomputer (controller) and a bipolar transistor Q1. The bipolar transistor Q1 is an npn type bipolar transistor. A base of the bipolar transistor Q1 is connected to the microcomputer via a resistor R8. A collector of the bipolar transistor Q1 is connected to a cathode of the light emitting diode. An emitter of the bipolar transistor Q1 is connected to standard potential. One end of a resistor R9 is connected between the base of the bipolar transistor Q1 and the resistor R8. The other end of the resistor R9 is connected to standard potential.

An anode of the light emitting diode is connected to output of the switching power supply 1 via a current limit resistor R10. The MOSFET is connected between the other end of the resistor R7 and standard potential. Primary side and secondary side of the switching power supply 1 are insulated by the photo MOS relay 10 and so on.

The microcomputer sets potential of the base "high" in case of burst avoidance mode. Thus, the photo MOS relay 10 becomes ON because the bipolar transistor Q1 becomes ON state and the light emitting diodes lights. Further, the microcomputer sets potential of the base "low" in case of burst non-avoidance mode. Thus, the photo MOS relay becomes 10 OFF because the bipolar transistor Q1 is OFF state and the light emitting diode does not light.

In the above mentioned embodiment, inclination of voltage V_{SENSE} which is occurred to the sense terminal SENSE is changed with two steps. Not limited to this, inclination of voltage V_{SENSE} which is occurred to the sense terminal SENSE may be changed with not less than three steps.

### [INDUSTRIAL APPICABILITY]

The present invention can be suitably employed in a flyback type switching power supply and an amplification device.

### [DESCRIPTION OF REFFERENCE SIGNS]

- 1: Switching power supply
- 4: Switching element
- 5: Control IC (control circuit)
- 7: Shunt regulator (current detection element)
- 8: Photo coupler (feedback element)
- 9: Change circuit
- 10: Switch, photo MOS relay
- D2: Diode
- Q1: Bipolar transistor
- R5: Current detection resistor
- R7: Resistor
- R10: Current detection resistor

## Claims

1. A switching power supply comprising:
a feedback element;
a voltage detection element which is connected to the feedback element at secondary side of the switching power supply and changes current which flows to the feedback element based on output voltage of the switching power supply;
a control circuit which is connected to the feedback element at primary side of the switching power supply and controls the switching element; and
a current detection resistor which is connected to the switching element, wherein
the controller circuit
controls burst mode or normal mode based on voltage which is occurred in a first terminal which is connected between the current detection resistor and the switching element and a value based on voltage which is occurred in a second terminal which is connected to the feedback element,
sets the switching element ON until the voltage which is occurred in the first terminal reaches to the value based on the voltage which is occurred in the second terminal, and
sets the switching element OFF when the voltage which is occurred in the first terminal reaches to the value based on the voltage which is occurred in the second terminal,
further comprising: a change circuit which changes inclination of the voltage which is occurred in the first terminal.

2. The switching power supply according to claim 1, wherein the change circuit has
a diode in which an anode is connected between the first terminal and the current detection resistor and a cathode is connected to a resistor, and
the resistor in which one end is connected to the cathode and the other end is connected to standard potential.

3. The switching power supply according to claim 1 or 2, further comprising:
a switch which is for switching fist mode which operates the change circuit and second mode which does not operate the change circuit.

4. The switching power supply according to claim 1 or 2 further comprising:
a switch which is for switching first mode which operates the change circuit and second mode which does not operate the change circuit,
wherein the switch is connected between the other end of the resistor and the standard potential.

5. The switching power supply according to claim 4, wherein the switch becomes ON in case of the first mode and becomes OFF in case of the second mode.

6. The switching power supply according to claim 4 or 5, wherein
the switch is a photo MOS relay which has a light emitting diode and a MOSFET,
further comprising: a controller; and
an npn type bipolar transistor in which a collector is connected to a cathode of the light emitting diode, a base is connected to the controller, and an emitter is connected to standard potential,
an anode of the light emitting diode is connected to output of the switching power supply via a current limit resistor, and
the MOSFET is connected between the other end of the resistor and the standard potential.

7. The switching power supply according to claim 6, wherein the controller sets the switch ON by setting potential of the base "high" in case of the first mode, and sets the switch OFF by setting potential of the base "low" in case of the second mode.

8. An amplification device comprising:
the switching power supply according to any one of claims 1 to 7; and
an amplifier to which output voltage from the switching power supply is supplied to.
